# EUROPEAN PATENT SPECIFICATION

(11) **EP 0 787 615 B1**
(45) Date of publication and mention of the grant of the patent: **27.08.2003**
(21) Application number: 97101230.7
(22) Date of filing: 27.01.1997
(51) Int. Cl.: B60K 17/04, B60K 17/28

(54) **Transmission for a working vehicle**
Getriebe für ein Arbeitsfahrzeug
Boîte de vitesses pour véhicule de travail

(30) Priority: 31.01.1996 JP 1483296; 22.02.1996 JP 3414896
(43) Date of publication of application: 06.08.1997
(73) Proprietor: KANZAKI KOKYUKOKI MFG. CO., LTD., Amagasaki-Shi, Hyogo-Ken (JP)
(72) Inventor: Matsufuji, Mizuya, Amagasaki-shi, Hyogo-ken (JP)
(74) Representative: Henkel, Feiler, Hänzel

(56) References cited:
- DE-A- 4 429 093
- FR-A- 2 722 856
- US-A- 4 154 314
- US-A- 5 022 477
- US-A- 5 410 923
- PATENT ABSTRACTS OF JAPAN vol. 017, no. 389 (M-1449), 21 July 1993 -& JP 05 069797 A (ISEKI & CO LTD), 23 March 1993

## Description

### FIELD OF THE INVENTION

The present invention relates to a transmission for driving front and rear wheels of a running vehicle, and more particularly to a transmission which is provided in a housing thereof with a hydrostatic transmission ( hereinafter referred to as HST ), a front wheel driving construction, and a restraint mechanism for rearward speed change.

### BACKGROUND OF THE INVENTION

conventionally, a transmission equipped with an HST and for driving front wheels and rear wheels has been well-known, which is disclosed in, for example, the USP No. 5,544,547 ( KK-43 ). Such technique drives a hydraulic pump of the HST by an input shaft given engine power transmits the power from the rear end of the hydraulic motor of HST to a differential gear unit therethrough a gear type speed changing unit so as to drive the rear wheels, and drives the front wheels through a universal joint by a fore end of the output shaft frowardly projecting from a housing.

The conventional technique is so constructed that both the hydraulic pump and a hydraulic motor are housed in the housing and the front wheels are directly driven by the output shaft of the hydraulic motor of HST, whereby when the gear type speed changing unit is switched, the state that a speed ratio between the front wheels and the rear wheels is not synchronized and when the gear type speed changing unit is switched to the high speed stage, in order to avoid the occurrence of the above state, a restraint mechanism must be provided which restrains the front wheels from being driven when the gear type speed changing unit is switched to the high speed side.

The transmission provided with the HST and gear type speed changing unit, when the latter is switched to the high speed operating position, cannot operate a speed change pedal of HST to increase the speed of rearward movement more than a predetermined value, which is well-known in, for example, the Japanese Utility Model Publication No. Sho 62-5942.

In such conventional technique, the restraint mechanism for rearward movement speed change with respect to the speed changing unit of HST is constructed in such a manner that in order to change the speed of the gear type speed changing unit, a restraint ring is interposed outside the housing and between the operating lever and the speed changing pedal disposed outside the housing, whereby, when dust or the like attaches to the link after long use, complete restraint may not be made, resulting in a lack of reliability.

Also, the aforesaid USP No. 5,544,547 discloses that in a housing of a running vehicle are housed the HST, a power takeoff ( herein after referred to as PTO ) clutch,and a PTO brake unit. In detail, the housing is partitioned therein into a front chamber and a rear chamber, the HST is housed in the front chamber, and a PTO transmission for transmitting power from an input shaft to a PTO shaft through a PTO transmission shaft onto which the PTO clutch is disposed, and the PTO brake unit for stopping the rotation of the PTO shaft, are disposed in the rear chamber. The PTO brake is formed into a hydraulic actuation type which forms a cylinder chamber on the side wall of a housing of the rear chamber, pistons are housed in the cylinder chamber and a brake pad provided at the utmost end of a piston rod is pressed onto the outer peripheral surface of a clutch casing of the PTO clutch to thereby exert the braking action.

The brake pad, however, must strongly be pressed onto the clutch casing, whereby a large braking capacity is required to enlarge the PTO brake unit. Furthermore, the cylinder for actuating the PTO braking unit must be enlarged. Since the cylinder chamber is formed in the rear housing, an oil pressure supply passage for making the brake unit inactive when the PTO clutch is "on ", is required to lead from the front housing to the rear one so as to be longer, resulting in that the brake response delays due to a conduit resistance. In a case that a working machine larger in amount of inertia is mounted on he vehicle and driven by the PTO shaft, the PTO clutch, when put on, is abruptly connected to apply a large force to the PTO shaft and input shaft, at which time a shock is larger and an engine may stop.

On a step at one lateral side of the vehicle is disposed a running pedal for operating the HST to be forward-rearward-switchable, and on the step at the other lateral side are disposed two left and right turn brake pedals independently operable of the left and right brake units provided on the vehicle, and one master brake pedal is disposed in the vicinity of the running pedal, which is well-known by, for example, the Japanese Patent Publication No. Hei 6-20867.

In the above-mentioned technique, a support cylinder is laterally and rotatably supported to a support frame below the seat, the right turn brake pedal is fixed to one end of the support cylinder and a first outer cylinder is fixed to the other end, and an abutting arm is provided on the first outer cylinder to be connected with the left and right brake units. A pedal shaft is relative-rotatably fitted into the support cylinder, onto one end of the pedal shaft is fixedly fitted a second outer cylinder fixing thereon the left turn brake pedal,and the second outer cylinder connects with the left running brake unit. Thus, the left and right turn brake pedals are trod to enable the left and right brake units to be independently exerted. The other end of the pedal shaft outwardly projects from the first outer cylinder and provides the abutting arm, a boss portion of the master brake pedal is relative-rotatably fitted onto the support cylinder adjacent to the first outer cylinder, and an interlocking member is provided on the boss portion, so that, when the master brake pedal is trod, the interlocking member simultaneously abuts against the abutting arm of the first outer cylinder and that of the brake shaft so as to simultaneously exert the left and right brake units.

In the vehicle having the running pedal, left and right turn brake pedals and master brake pedal, an operator, when the vehicle stops, changes his right foot treading the forward or rearward running pedal to the master brake, and for nimble foot change, it is required to lay out the surface of master brake pedal in the position easy to operate with respect to the respective running pedals. In the vehicle provided with a locking mechanism capable of fixing and releasing the running pedal in an optional forward movement operating position, when the left and right brake units equipped on the vehicle are simultaneously actuated, the locking mechanism must simultaneously be released, it is suggested that the locking mechanism is released in association with treading the master brake pedal. The conventional construction, however, sets the axis of rotation of master brake pedal compulsorily on the axis of rotation of the turn brake pedal, so that the master brake pedal is inevitably positioned thereby being restricted to the running pedal or the locking mechanism, on designing layout of the transmission.

Furthermore, the support cylinder for fixing the right turn brake is relative-rotatably fitted onto the outer periphery of the brake shaft to which the left turn brake is fixed, and the cylinder fixing thereon the master brake is relative-rotatably fitted onto the outer periphery of the support cylinder, which triple construction applies a frictional force on both the brake shaft and cylinders, for example, when the right turn brake pedal is trod to rotate the cylinder. Herein, when the outside air temperature is low and the viscosity of lubricating oil interposed between the brake shaft and the support cylinder and between the support cylinder and the cylinder is high, the frictional force is enlarged, resulting in that the brake shaft and cylinder together rotate, whereby there is a fear that in spite that the vehicle body is intended to rightwardly turn, both brake units malfunction to cause the vehicle to stop.

In the construction such that the pedal shaft mounting thereon the left and right turn brake pedals and the pedal shaft for mounting thereon the master brake pedal are coaxially disposed, when the master brake pedal is trod, the interlocking member of the master brake pedal simultaneously strike the respective abutting arms of the left and right brake pedals, so that in order to simultaneously operate the left and right brake units, the respective abutting arms and the interlocking member must accurately be positioned for mounting, and, when an error is caused when parts are processed or the assembly, the interlocking member goes wrong in the timing of striking the abutting arms. Hence, when the master brake pedal is trod in order to stop the vehicle during the running on the road in this condition, if the abutting arm to firstly strike the interlocking member operates one brake unit in advance, the vehicle laterally swings not to be stopped in the straight state. Also, even if the abutting arm is accurately positioned, when the abutting arm or the interlocking member wears due to use for long time or excessive treading, the aforesaid timing may go wrong, so that it is extremely difficult to fine-adjust the brake unit.

### SUMMARY OF THE INVENTION

An object of the present invention is to provide a compact transmission which can drive front wheels, rear wheels, and a PTO shaft wherein the rearward movement in a high speed area not for practical use is made impossible.

It is still another aspect of the invention to form the portions to mount thereon the hydraulic pump and hydraulic motor at the front wall of the housing to be separable therefrom.

According to the invention there is provided the transmission of claim 1. Preferred embodiments are defined in the sub-claims.

These and other objects, features and advantages of the invention will become more apparent upon a reading of the following detailed specification and drawings.

### BRIEF DESCRIPTION OF THE DRAWINGS

Fig. 1 is an entire side view of a working vehicle of the invention,
Fig. 2 is a skeleton diagram of power transmission of a running system and a PTO system,
Fig. 3 is a sectional side view of a front casing,
Fig. 4 is a sectional side view showing a gear type speed changing unit and a power transmission mechanism to a mid-PTO shaft,
Fig. 5 is a sectional side view of an upper portion of a housing, showing a power transmission mechanism to a front wheel driving shaft and a power transmission mechanism to a rear PTO shaft,
Fig. 6 is a front view showing a positional relationship between the running system and the PTO system,
Fig. 7 is a sectional view looking in the direction of the arrows X-X in Fig. 3,
Fig. 8 is a sectional plan view of a speed changing portion of the gear type speed changing unit and a rearward speed change restraint unit engageable with the speed change operating portion,
Fig. 9 is sectional views looking in the direction of the arrows Y-Y in the right side of Fig. 3 and a sectional view looking in he direction of the arrows Y'-Y' in the left side of Fig. 3,
Fig. 10 is a perspective front view of the housing,
Fig. 11 is a hydraulic circuit diagram,
Fig. 12 is a side view showing a restraint mechanism in the state that a speed control arm is in a neutral position,
Fig. 13 is a side view showing the restraint mechanism in the state that the speed control arm is in a maximum acceleration position at the forward movement side,
Fig. 14 is a side view showing the restraint mechanism when the speed change arm is regulated of rearward acceleration
Fig. 15 is a side view showing the restraint mechanism when the speed control arm is in the maximum acceleration position at the rearward movement side,

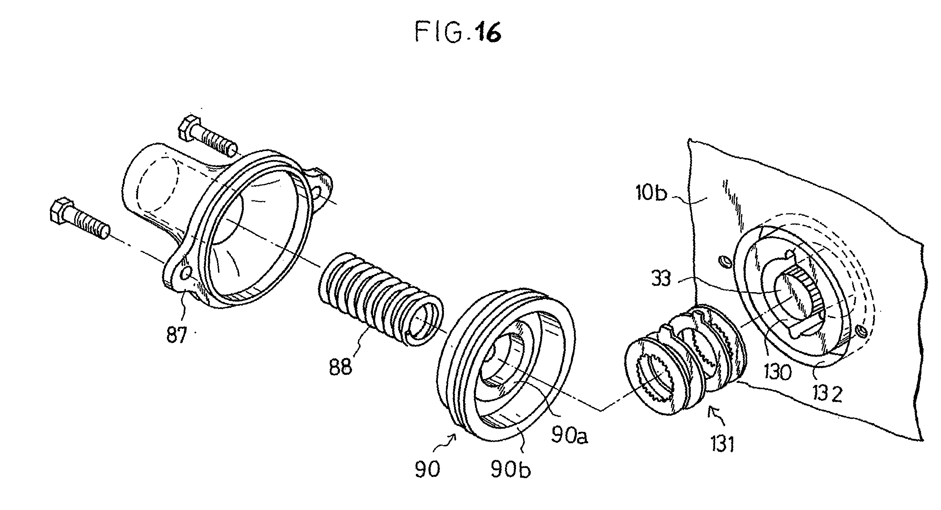

Fig. 16 is a disassembly/reassembly view of a PTO brake,
Fig. 17 is a sectional view looking in the direction of the arrows Z-Z in Fig. 7, and
Fig. 18 is a sectional developed plan view of a rear portion of a rear casing and a rear axle casing.

### DESCRIPTION OF THE PREFERRED EMBODIMENT OF THE INVENTION

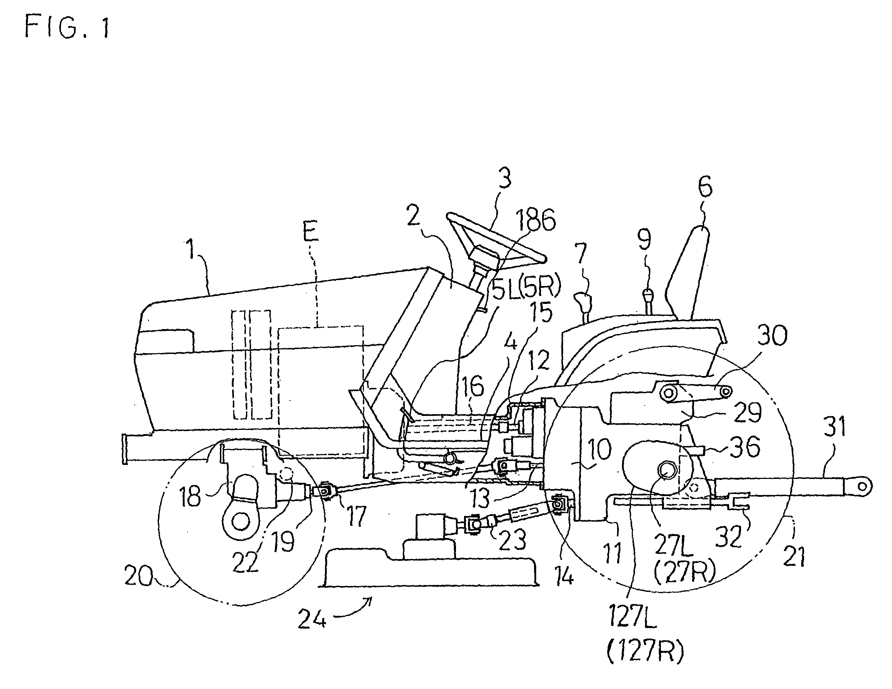

Explanation will be given on an entire construction of a mid-mount mower type working vehicle in accordance with Fig. 1, in which an engine E is mounted on a vehicle body frame in a bonnet 1 in the front of the vehicle body, a dashboard 2 is disposed behind the bonnet 1 and a handle 3 is disposed on the dashboard. Steps 4 are disposed at both sides below between the dash board and a seat 6, brake pedals 5L and 5R are disposed on the left side step 4, a forward running pedal 8F and a rearward running pedal 8R to be discussed below are juxtaposed on the right side step 4, and at the lateral side of the seat 6 are disposed a sub-speed-cha nging lever 7 and a PTO switching lever 9.

Under the seat 6 is disposed a transmission of the present invention, the transmission comprising a hydrostatic transmission ( hereinafter referred to as HST ), a gear type speed changing unit and a PTO transmission unit housed in a housing comprising a front casing 10 and a rear casing 11. An input shaft 12, a front wheel driving shaft 13, and a mid-PTO shaft 14 forwardly project from the front casing 10, with the input shaft 12 are interlocked a crank shaft of the engine E through a damper and a transmission shaft 16 in a vehicle body frame 15. The front wheel driving shaft 13 connects with an input shaft 19 projecting from the front axle casing 18 through an universal joint 17, so that power is transmitted to the input shaft 19 and drives front wheels 20 journalled to the left and right sides of the front axle casing 18. Reference-numeral 22 designates a hydraulic cylinder expanding and contracting by operating a handle so as to steer the front wheels 20. The mid-PTO shaft 14 interlocks through a universal joint 23 with an input shaft 26 projecting from a gear box 25 of a mower 24, which is constructed to elevate and fall by an elevator ( not shown) with respect to the ground surface in a vacancy between the front wheels 20 and the rear wheels 21.

Rear axle boxes 127L and 127R are mounted at both side surfaces at the rear of the rear casing 11 and axles 27L and 27R laterally project and pivotally support rear wheels 21 for driving respectively. On the upper surface of the rear casing 11 is mounted a hydraulic cylinder casing 29 for a hydraulic elevator and a pair of left and right lift arms 30 rearwardly project from the cylinder casing 29. Lower links 31 are pivotally supported at the front portions thereof onto the rear surface of the rear casing 11 and a plate provided with a draw bar hitch 32 is mounted to the lower end of the same, a working machine being mountable in relation of freely elevating and falling to the lift arms 30, lower links 31 and top links ( not shown ), and a traction working machine is mountable to the draw bar hitch 32.

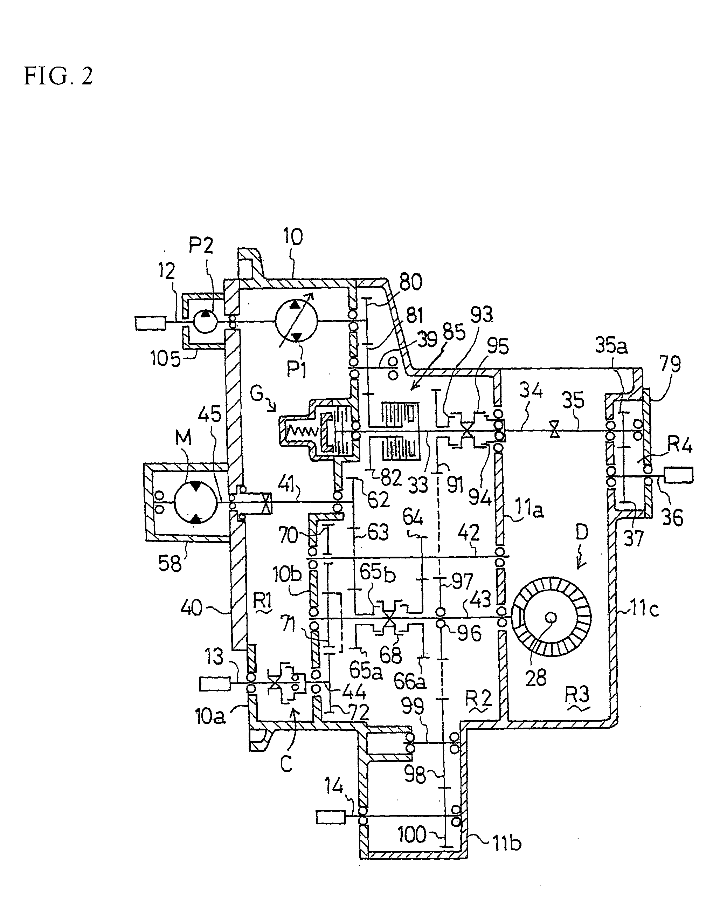

Next, explanation will be given on the structure of transmission in accordance with Fig.2, in which the front casing 10 and rear casing 11 are longitudinally divisibly jointed to form the housing, the front casing 10 forms at the front surface thereof a front wall 10a and at the rear surface a rear wall 10b, a flange 10h for mounting thereto the end of the body frame 15is formed at the periphery of the front wall 10a, inside the flange 10h is mounted a center section 40 for closing an opening formed at the front wall 10a of the front casing 10, and a first chamber R1 is formed between the rear wall 10b of the front casing 10 and the center section 40, the center section 40 supporting a hydraulic pump P1 and a motor M to be discussed below and forming part of the front wall 10a. A bore for supporting a front wheel driving shaft 13 is formed on the front wall 10a at the vertically lower and about laterally center portion thereof. The rear casing 11 is open at he front end thereof and a partition 11a is provided at the longitudinal center of the body so as to longitudinally divide the interior of the rear casing 11, whereby a second chamber R2 is formed between the rear wall 10b of the front casing 10 and the partition 11a and a third chamber R3 is formed between the partition 11a and a rear wall 11c of the rear casing 11. Furthermore, a recess is formed on the outer surface of the rear wall 11c of the rear casing 11, the recess being closed by a lid 79 so as to form a fourth chamber R4.

An input shaft 12 is supported at the upper portion of the first chamber R1 and between the center section 40 and the rear wall 10b, and the hydraulic pump P1 is disposed inside the center section 40 and is driven by the input shaft 12. Outside the center section 40 is disposed a pump casing 105 containing therein a charging pump P2, so that the input shaft 12 drives the charging pump P2. A first running transmission shaft 41 is supported in the first chamber R1 and substantially at the longitudinal center, the hydraulic motor M being disposed coaxially of the first running transmission shaft 41 and outside the center section 40. The hydraulic pump P1 and hydraulic motor M are fluid-connected with each other through an oil passage bored in the center section 40 to be discussed below, thereby constituting the HST. Thus, the hydraulic pump P1 and hydraulic motor M are mounted in the position at the front wall 10a separate from the housing, thereby facilitating the assembly of HST and that with respect to the front casing 10.

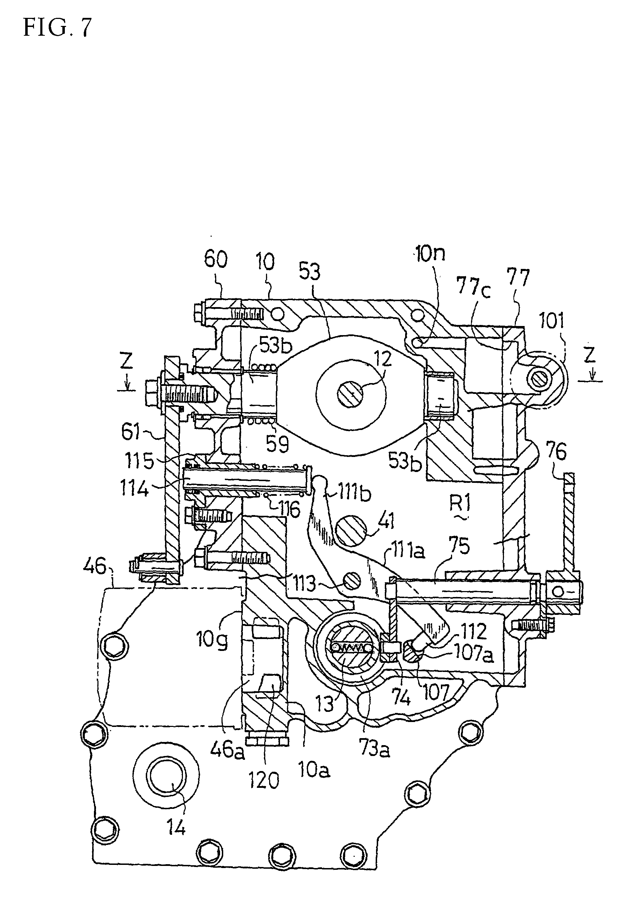

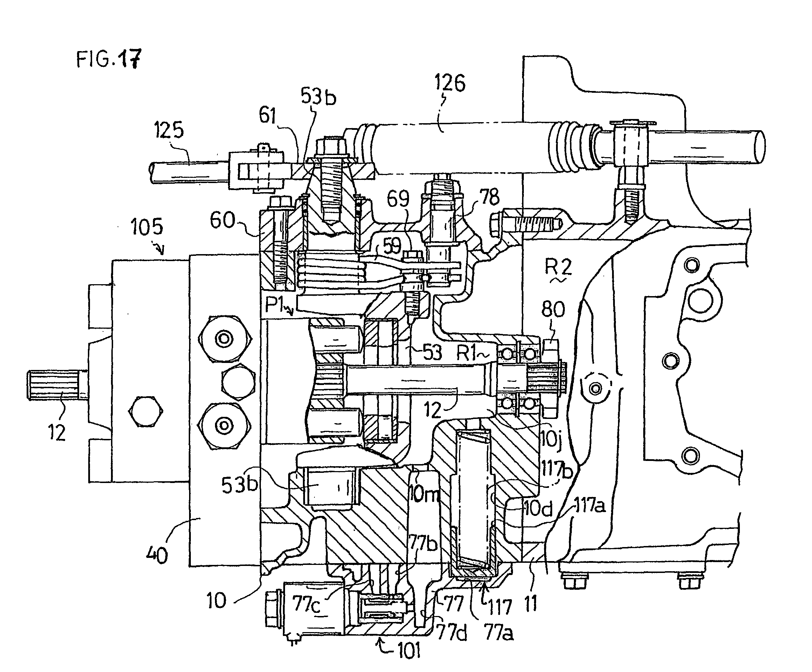

The hydraulic pump P1 is so constructed that a cylinder block 51 is rotatably disposed on a pump mounting surface 50 formed on the upper, inner surface of the center section 40 and the input shaft 12 engages with the cylinder block 51 at the center thereof. Axial pistons 52 are housed in a plurality of cylinder bores at the cylinder block 51 in relation of being movable in reciprocation through biasing springs, and abut at the heads against a thrust bearing 53a of a movable swash plate 53. The movable swash plate 53 can slant the abutting surface of the thrust bearing 53a from the vertical condition around trunnions 53b projecting sidewise from the movable swash plate 53. As shown in Fig. 7, one of the trunnions 53b is rotatably supported at the inner surface of the left side wall of the front casing 10 and the other is rotatably supported at the right side plate 60 for closing an opening formed at the right side wall of the front casing 10. Onto the outer periphery of the other trunnion 53b is fitted a neutral return spring 59 (refer to Fig. 17). Both ends of the neutral return spring 59 extend in the same direction and cross on the way so as to sandwich therebetween a movable pin 69 erected on the side surface of the movable swash plate 53 and a fixed eccentric pin 78 erected on the inner surface of the right side plate 60, which pin 78 is set in a predetermined position to return the movable swash plate 53 to the accurate neutral position. The trunnion 53b projects from the right side plate 60 and a speed control arm 61 is fixed to the projection of trunnion 53b. The speed control arm 61 is interlocked with a forward running pedal 8F and a rearward running pedal 8R disposed on the step 4 through a connecting rod 125 to be discussed below.

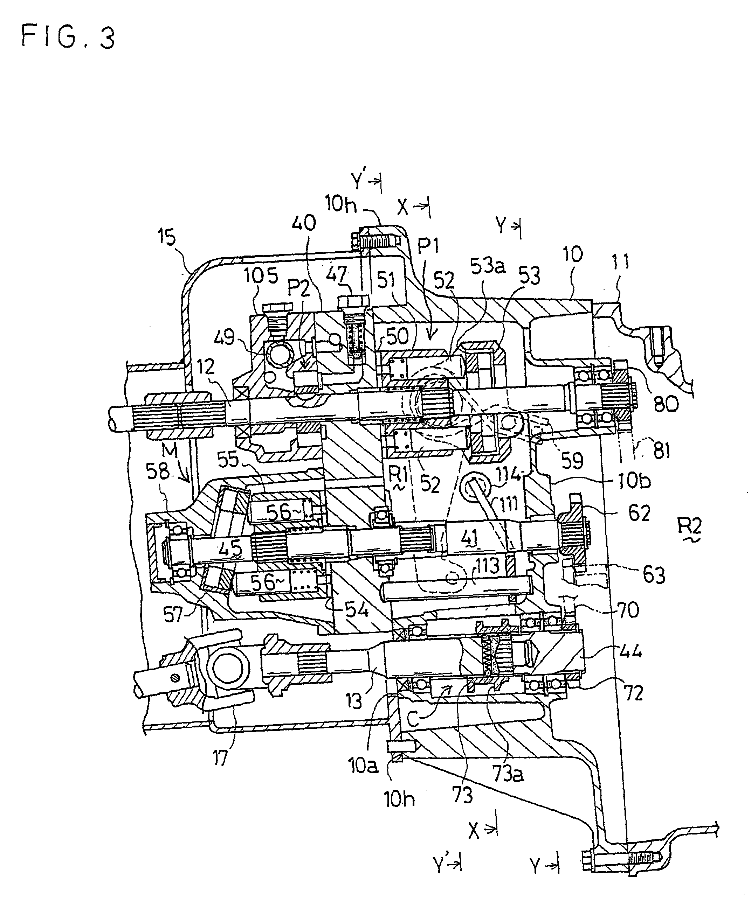

In Fig.3, a motor mounting surface 54 is formed on the lower outer surface of the center section 40, on the motor mounting surface 54 is rotatably disposed a cylinder block 55, and an output shaft 45 engages with the central portion of the cylinder block 55. A plurality of axial pistons 56 are housed in a plurality of cylinder bores of the cylinder block 55 through biasing springs in relation of being movable in reciprocation, and abut at the heads against a fixed swash plate 57. The fixed swash plate 57 and cylinder block 55 are housed in a motor casing 58 mounted onto the outer surface of the center section 40, whereby on the lower inner surface of the center section 40 at reverse side to the motor mounting surface 54 is disposed a vacancy in which nothing is disposed, thereby securing a wide space in the first chamber R1 for housing a restraint mechanism for high speed rearward movement and a front wheel driving clutch mechanism C.

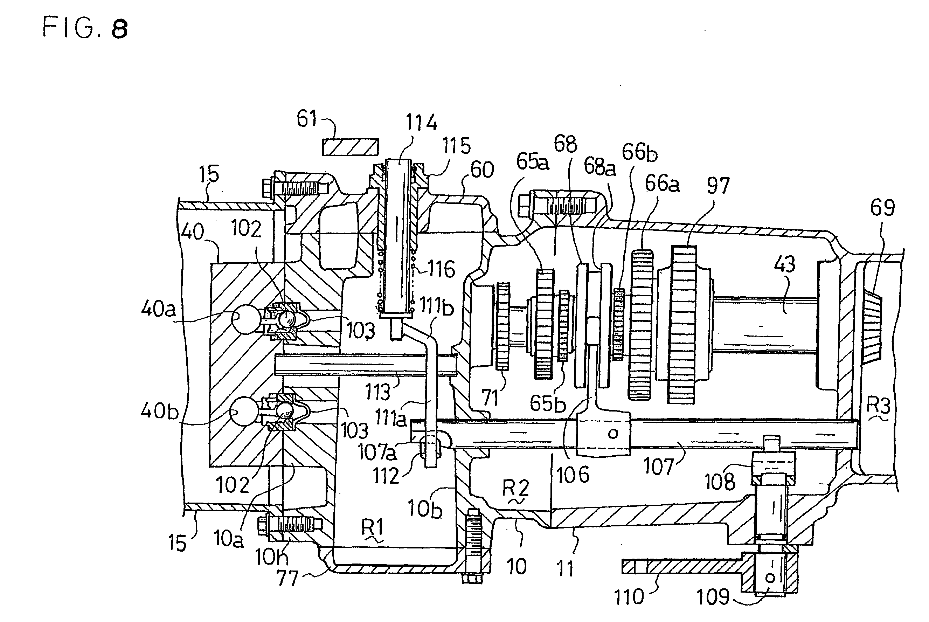

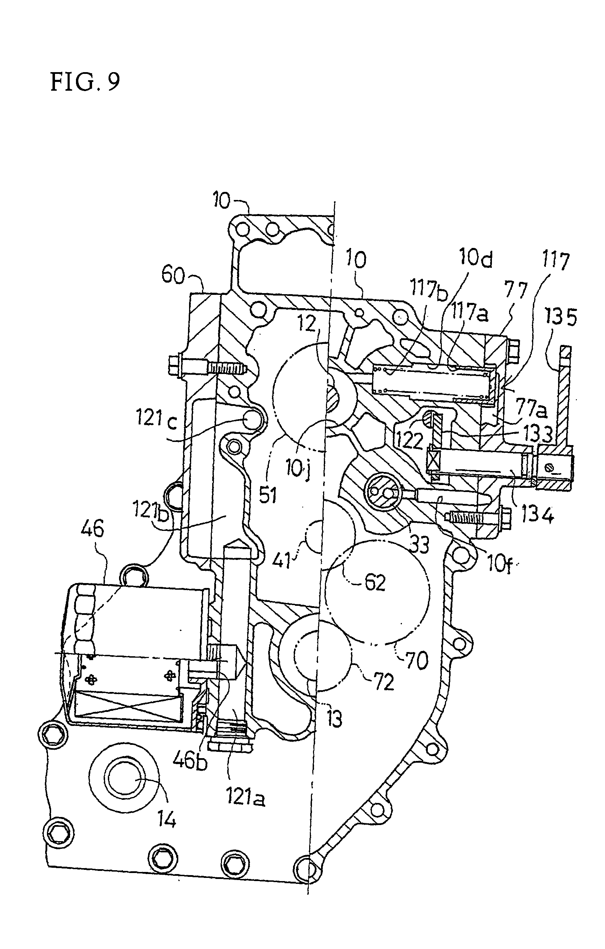

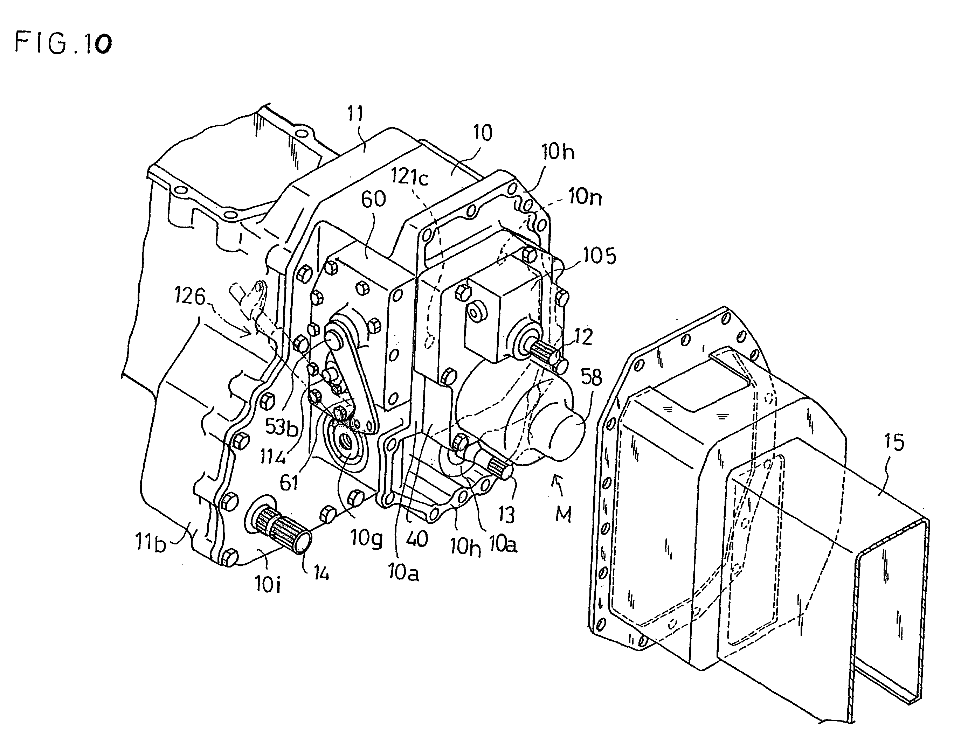

The hydraulic pump P1 and hydraulic motor M are fluid-connected with each other through a pair of oil passages 40a and 40b ( refer to Fig. 8) so as to form a closed circuit therewith, into which pressure oil is supplied from a charging pump P2 provided on the input shaft 12. As shown in Figs. 7, 9 and 10, a filter mounting portion 10g for detachably mounting an oil filter 46 to the right side wall of the front casing 10 is formed at the lower outer surface of the casing 10. An oil bore 46a formed in the filter mounting portion 10g and communicating with an inlet port of the oil filter 46, as shown in Fig. 7, communicates with the second chamber R2 through an oil bore 120 open at the rear wall 10b. lubricating oil stored in the second chamber R2 is guided into the oil filter 46 from the oil bore 120 through the oil bore 46a, and, after filtered by the oil filter 46, is guided to a suction port of the charging pump P2 from an outlet port 46b ( refer to Fig. 9 ) of the oil filter 46 through an oil passage 121a provided at a thick portion of the right side wall of the front casing 10, an oil passage 121b formed between the inner surface of the right side plate 60 and the outer surface of the right side wall of the front casing 10, an oil passage 121c open on the front surface of the same, and an oil passage in the center section 40.

Thus, the hydraulic pump P1 is housed in the first chamber R1, whereby the oil stored therein is apt to be at a relative high temperature. On the other hand, the gear type speed changing unit and a PTO transmission unit to be discussed below are housed only in the second chamber R2, whereby the temperature of oil therein is not so high. Hence, the oil at a relative-low temperature is taken in the charging pump P2 through the oil filter 46 and supplied to the closed circuit of HST, so that durability of the hydraulic pump and hydraulic motor is improved. Also, elements related to the oil filter 46 are collectively disposed in the front casing 10, so that short and simple oil passage construction, without piping, can take in the oil within the rear casing 11, thereby expecting a low manufacturing cost.

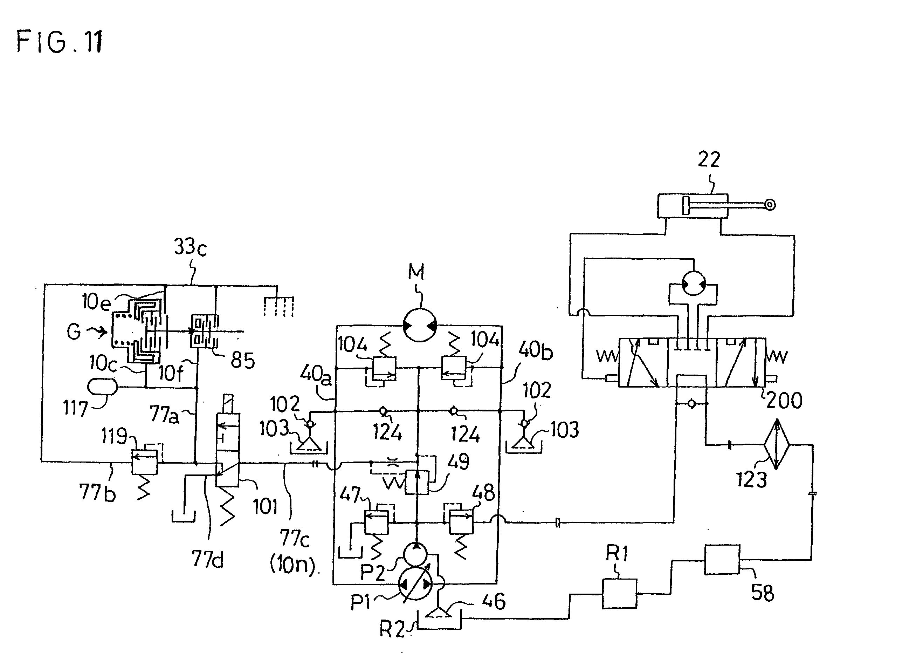

Pressure of oil discharged from a discharge port of the charging pump P2, as shown in Fig. 11, is set by a main relief valve 47, and part of the pressure oil is sent to a directional control valve 200 for power steering through the piping and a resistance valve 48 housed in the casing 105 for the charging pump P2, and, when the directional control valve 200 switched by the rotation of the handle 3, is sent to any oil chamber of a double action hydraulic cylinder 22 to thereby advance and retract, thereby steering the front wheels. The return oil from the steering cylinder 22 is returned to an oil cooler 123 and a motor casing 58 through the piping, and further sequentially flows into the first chamber R1 through an oil bore at the center section 40 and into the second chamber R2 through that at the rear wall 10b. The pressure oil, which is discharged from the charging pump P2 and adjusted of pressure by a pressure reducing valve 49 housed in the casing 105 for the charging pump P2, puts open one of check valves 124 at the low pressure side so as to be supplied to either one oil passage 40a or 40b in the closing circuit. When the oil pressure at the high pressure side oil passage 40a becomes higher than a set pressure, a high pressure relief valve 104 is actuated. Drain oil produced when the pressure reducing valve 49 is actuated for pressure adjustment, is sent to a PTO clutch brake control valve 101.

The oil passages 40a and 40b constituting the closed circuit, as shown in Fig. 8, connect with check valves 102 having oil filters 103 contained in the front wall 10a of the front casing 10. In a case that the vehicle stops its engine E to halt on the slope, when the oil in the closed circuit leaks from each part of hydraulic motor M or hydraulic pump P1 to cause a lack in operating oil, the lubricating oil in the first chamber R1 is supplied by self suction due to negative pressure into the closed circuit through the oil filters 103 and check valves 102. And, as shown in Fig. 3, at the upper portion of center section 40 is provided the main relief valve 47 for setting the discharge oil pressure of the charging pump P2 to the specified value.

Next, as shown in Figs. 2, 4 and 5, a PTO counter shaft 39, a PTO transmission shaft 33, a second running transmission shaft 42 and a third running transmission shaft 43 are journalled between the rear wall 10b of the front casing 10 and the partition 11a in the rear casing 11 longitudinally in parallel to each other through the bearings. Enlarged or swollen portions 10i and 11b slantingly downwardly project from the joint portion between the front casing 10 and the rear casing 11 and a counter shaft 99 and a mid-PTO shaft 14 are rotatably and longitudinally journalled in the enlarged portions 10i and 11b through the bearings, respectively.

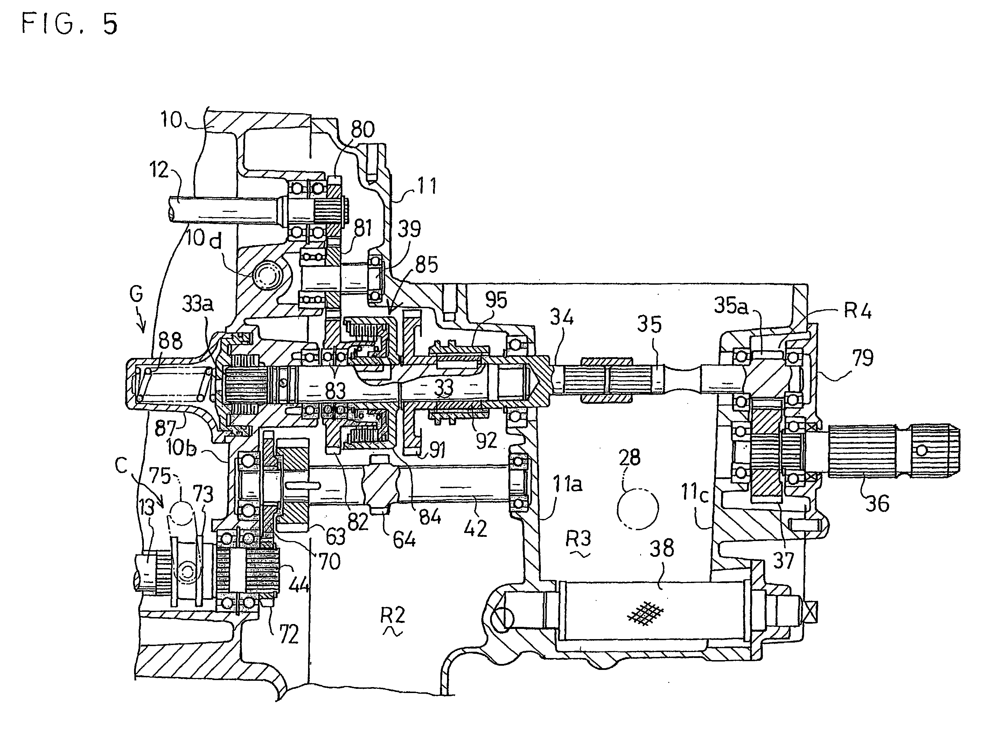

Also, as shown in Fig. 5, at the upper portion in the third chamber R3 is longitudinally journalled a rear PTO driving shaft 35 in relation of being coaxial with the PTO transmission shaft 33 and at the bottom in the same are juxtaposed a differential gear unit D and an oil filter 38 for the hydraulic elevator. The rear PTO driving shaft 35 enters at the rear end thereof into the fourth chamber R4 and a gear 35a is engraved onto the extension entering therein, and a rear PTO shaft 36 is journalled in the fourth chamber R4 between the rear wall 11c and the lid 79 so that the gear 35a engages with a gear 37 on the rear PTO shaft 36 positioned in the fourth chamber R4, the rear PTO shaft 36 projecting at the rear end thereof outwardly of the housing from the lid 79.

Next, explanation will be given on a power transmission mechanism of the transmission in accordance with Figs. 2 through 6, in which, as the above-mentioned, power is transmitted to the input shaft 12 from the engine E through a damper and coupling shaft 16, the hydraulic pump P1 and charging pump P2 are driven by the input shaft 12 and pressure oil from the hydraulic pump P1 is sent to the hydraulic motor M so as to stepless-drive the output shaft 45. The first running transmission shaft 41 is integrally spline-coupled with the rear end of the output shaft 45 and a gear 62 is fixed to the rear end of the shaft 41 penetrating the rear wall 10b.

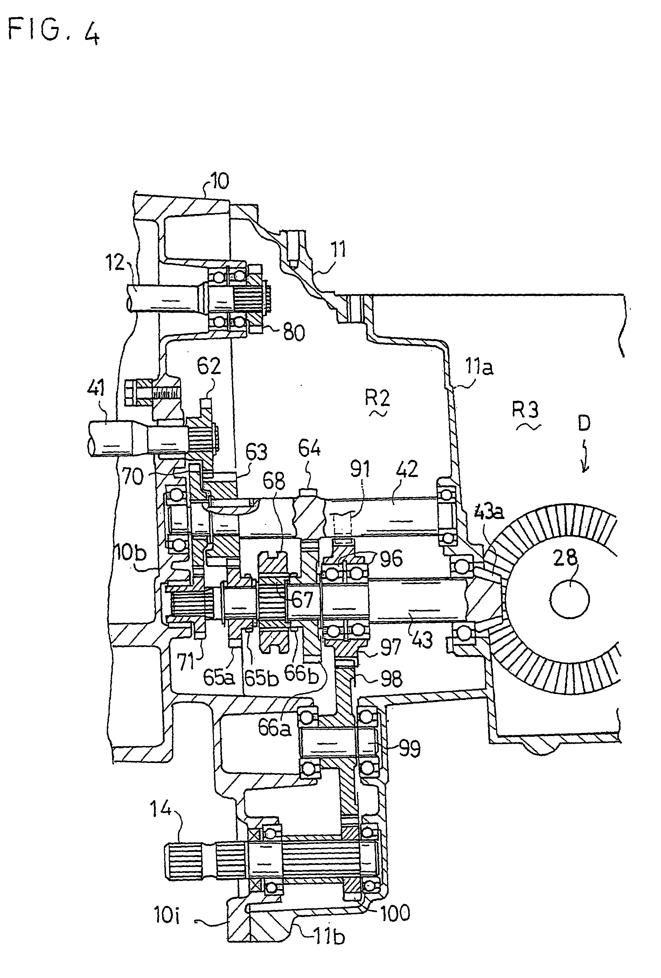

Next, explanation will be given on the gear type speed changing unit, in which the gear 62 on the first running transmission shaft 41, as shown in Figs. 2 and 4, engages with a larger diameter gear 63 fixed onto the second running transmission shaft 42, and the larger diameter gear 63 permanently engages with a smaller diameter gear 65a freely rotatably fitted onto the third running transmission shaft 43. A smaller diameter gear 64 is fixed onto the second running transmission shaft 42 and permanently engages with a larger diameter gear 66a freely rotatably fitted onto the third running transmission shaft 43, on which and between the smaller diameter gear 65a and the larger diameter gear 66a is fixed a hub 67, and a clutch slider 68 is not-relative-rotatably and axially slidably spline-fitted onto the hub 67.

A shift fork 106, as shown in Fig. 8, is retained to an annular recess 68a formed on the outer periphery of the clutch slider 68. The shift fork 106 is fixed to a shifter shaft 107, and the front portion thereof is interlocked with a rearward speed change restraint mechanism of a speed control arm 61 to be discussed below, the rear portion of the same engaging with a pin projecting from an arm 108. The arm 108 is fixed to the inner end of a switching shaft 109 pivotally supported to the left side wall of the rear casing 11, and at one outer end of the switching shaft 109 is fixed an H-L switching arm 110, which is connected with the aforesaid sub-speed change lever 7 through a link or the like.

Engaging members 65b and 66b provided on the gears 65a and 66a are formed engageable with the internal teeth of the clutch slider 68, so that, when the sub-speed-change lever 7 is operated, the clutch slider 68 is axially slidably moved through the H-L switching arm 110, high-low switching shaft 109, arm 108, shifter shaft 107 and shifter fork 106, so that either one of the gears 65a and 65b engages with the third running transmission shaft 43, thereby enabling the two high -low step speed change.

Concretely, when the sub-speed change lever 7 is operated to the high speed position, the clutch slider 68 engages at the internal teeth thereof with the engaging member 65b of the smaller diameter gear 65a, so that the power from the output shaft 45 is transmitted through the first running transmission shaft 41 →gear 62 →larger diameter gear 63 → smaller diameter gear 65a →engaging member 65b → slider 68 → -hub 67→third running shaft 43 and power of the high speed rotation is transmitted from a bevel pinion 43a provided on the rear and of the third running transmission shaft 43 to the axle 27 through the differential gear unit D.

Also, when the sub-speed-change lever 7 is operated to the low speed position, the clutch slider 68 engages at the internal teeth thereof with the engaging member 66b of the larger diameter gear 66a, so that the power from the output shaft 45 is transmitted through the first running transmission shaft 41→gear 62 →larger diameter gear 63 →second running transmission shaft 42 → smaller diameter gear 64→larger diameter gear 66a →engaging member 66b →clutch slider 68→ hub 67→ third running transmission shaft 43, thereby transmitting the power of low speed rotation to the axle 27 as the above-mentioned.

Next, explanation will be given on a restraint mechanism when the speed control arm 61 is operated for the rearward speed change. As shown in Figs. 3, 7 and 8, the shifter shaft 107 extends at the front end to be positioned in the first chamber R1, and at the front end is formed a cam surface cut semicircularly when viewed in section and having the deepest portion 107a. A restraint arm 111 is disposed below the hydraulic pump P1. The restraint arm 111 has a first arm 111a and a second arm 111b which extend in different directions from each other so as to be nearly V-like-shaped, and fixed at the middle portion to the support shaft 113. The support shaft 113 is journalled between the center section 40 and the rear wall 10b of the front casing 10 and longitudinally axially of the vehicle body, thereby laterally swingably supporting the restraint arm 111.

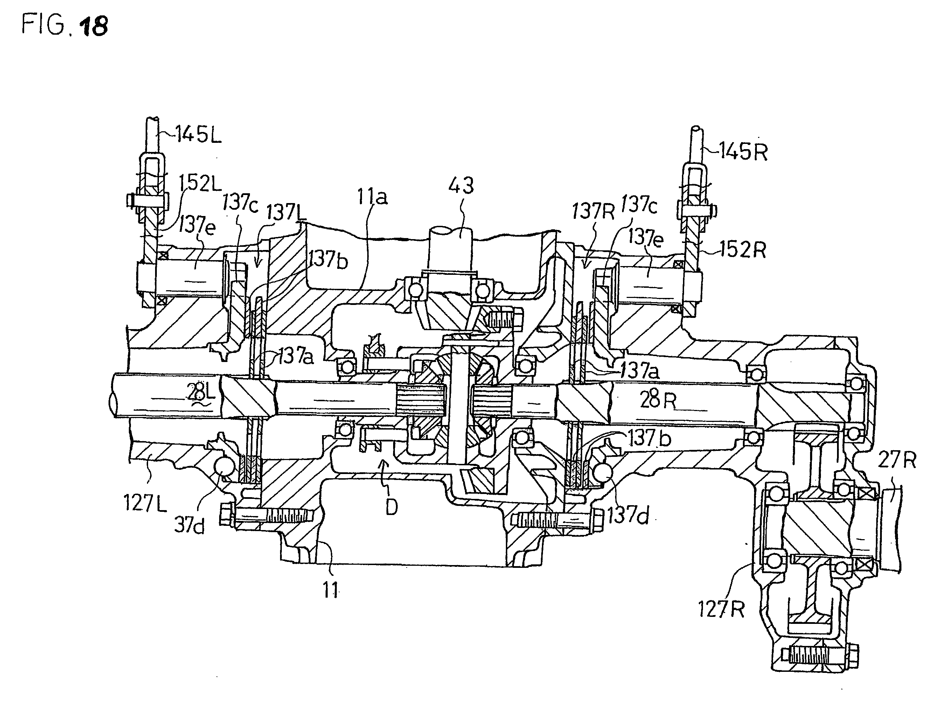

A cam 112 provided at the utmost end of the first arm portion 111a of the restraint arm 111 abuts against the cam surface of the shifter shaft 107, and the second arm portion 111b abuts at the utmost end thereof against one end surface of a restraint pin 114. The restraint pin 114 is positioned on the outer surface of the right side plate 60 and substantially at an intermediate portion of a rearward movement side speed change rotation range ( RB ) of the speed control arm 61 as shown in Fig. 20 and pivotally supported to the side plate 60 in relation of inwardly and outwardly advancing and retracting and of extending in parallel to the axis of slanting rotation, and a spring 116 is fitted on the outer periphery of the restraint pin 114 positioned in the first chamber R1 so as to bias the restraint shaft 114 to retract into the first chamber R1.

Thus, the restraint mechanism is contained in the first chamber R1 for the HST, whereby a space in the first chamber R1 can effectively be utilized to reasonably dispose the restraint mechanism and the high speed rearward movement not practically necessary can automatically be restrained. Also, since the restraint mechanism is contained in the first chamber R1, there is no obstacle of a foreign object, such as dust, mud or rust and the restraint mechanism stably accurately operates for a long time, thereby improving the durability and reliability, the restraint mechanism being manufactured in a small number of parts and at a low cost.

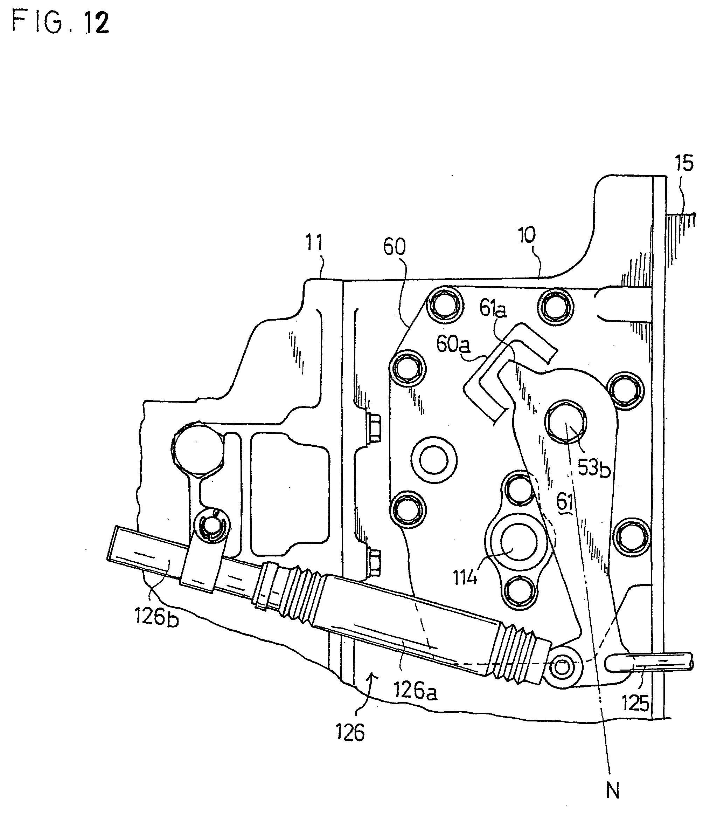

As shown in Figs. 12 through 15, a speed control arm 61 fixed onto the utmost end of a trunnion 53b projecting from the right side plate 60 is provided at the rotating base side with a retaining portion 61a, which is disposed within a U-like-shaped stopper 60a provided at the outer surface of the right side plate 60. When the retaining portion 61a rotates to abut against the inside surface of the recess of the stopper 60a, the maximum forward accelerating position F and the maximum rearward accelerating position R are set. At the utmost end of the speed control arm 61 are mounted a connecting rod 125 and a telescopic member 126a for a shock absorber 126, the connecting rod 125 being interlocked with the forward running pedal 8F and rearward running pedal 8R disposed on the step 4, the shock absorber 126 swingably pivoted at the base end 126b thereof onto the outer surface of the right side wall, and the telescopic member 121a preventing the speed control arm 61 from abrupt rotation.

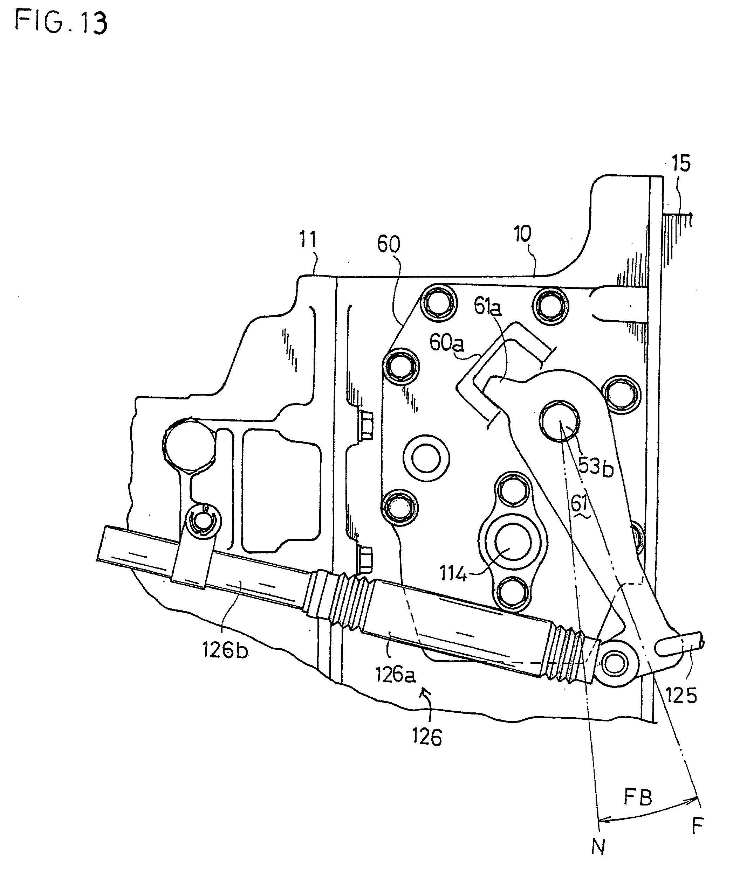

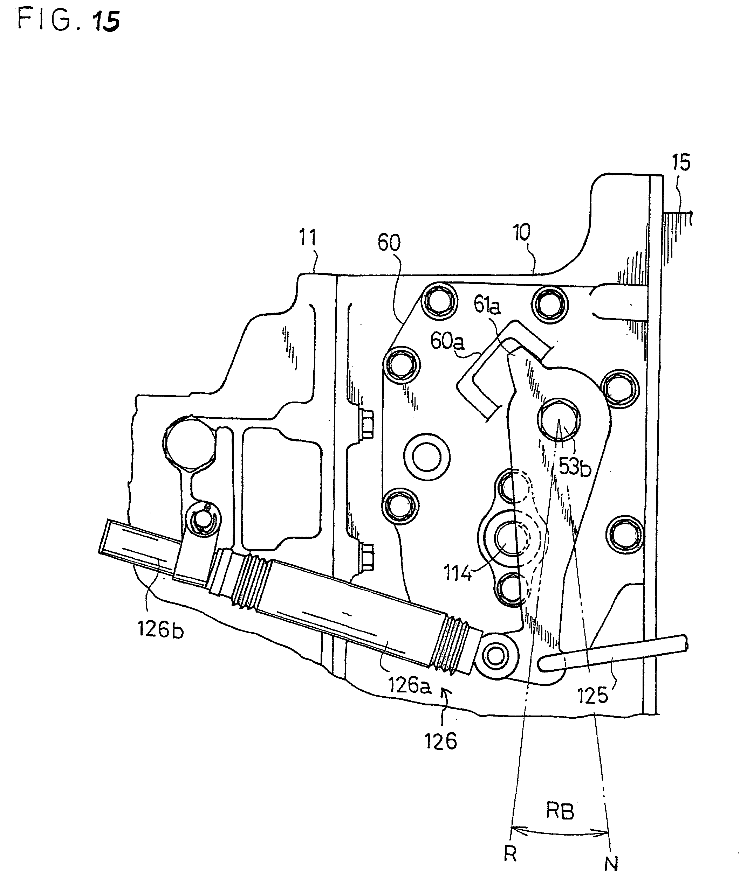

When the sub-speed-change lever 7 is turned to the neutral position and the low speed position, as shown in Fig.8, the pin 112 is positioned on the deepest position 107a of the cam surface, the restraint arm 111 is kept in the state as shown, and the speed control arm 61, as shown in Figs. 13 and 15, can freely rotate within the entire ranges of the forward movement side speed change rotation ( FB ) and of rearward movement side speed change rotation ( RB ) . When the sub-speed-change lever 7 is turned to the high speed position, the shifter shaft 107 forwardly slides and the cam 112 at the utmost end of the first arm portion 111a of the restraint arm 111 rides on the thinnest portion of the cam surface, whereby the restraint arm 111 swings counterclockwise in Fig. 7 around the support shaft 113 and the second arm portion 111b pushes the inner end surface of the restraint pin 114 to allow the restraint pin 114 to project at the outer end thereof outwardly from the outer surface of the right side plate 60.

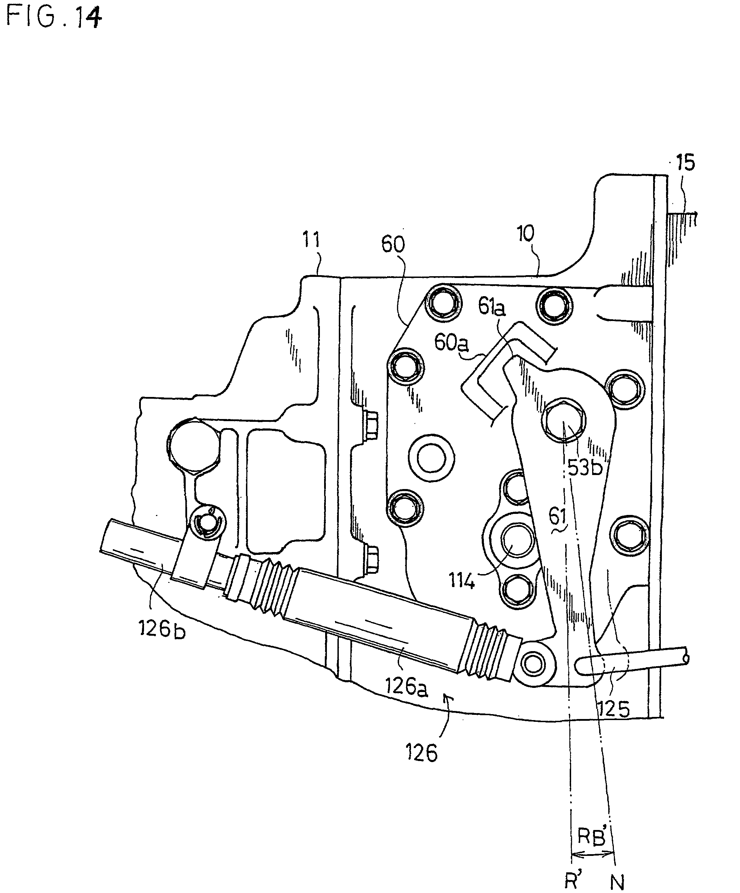

Accordingly, when the speed control arm 61 is intended to rotate toward the rearward movement side from the neutral position ( refer to Fig. 12 ) and reaches a substantially intermediate portion of the rearward movement side rotation range as shown in Fig. 14, one side surface of speed control arm 61 contacts with the outer periphery of the restraint pin 114, whereby a further acceleration is limited to be diminished to the rearward side speed change rotation ( RB' ). In brief, in a state that the sub-speed-change lever 7 is switched to the high speed side, so that when the rearward running pedal 8R is trod, the vehicle body would move rearwardly at high speed which is inconvenient for use, the practically useless high speed rearward movement is automatically cut, so that, only when the sub-speed-change lever is turned toward the low speed side, the rearward acceleration is performable in the entire rotation range ( RB ) of the speed control arm 61.

Next, explanation will be given on the power transmission mechanism for driving the front wheels. As shown in Figs. 2, 3, 4, 5, and 6, a gear 71 fixed to the front end of the third running transmission shaft 43 permanently engages with a gear 70 rotatably fitted to the front end of the second running transmission shaft 42, the gear 70 permanently engaging with a gear 72 fixed onto a running power take-out shaft 44 ( refer to Figs. 3 and 5 ). A front wheel driving shaft 13 is rotatably supported onto the front wall 10a through a bearing, and the running power takeout shaft 44 is rotatably supported to the rear wall 10b through a bearing and coaxially fitted at the front end onto the rear end of the front wheel driving shaft 13 in the first chamber R1.

Between the front end of the running power take-out shaft 44 and the rear end of the front wheel driving shaft 13 is provided a clutch mechanism C for putting the front wheel drive to be on-off. In detail, splines are formed on the outer periphery of the front end of the running power take-out shaft 44 and that of the rear end of the driving shaft 13, and on the splines at the rear end of the front wheel driving shaft 13 is fitted a clutch slider 73 not-relative-rotatably and axially slidably. The clutch slider 73, as shown in Fig. 7, forms at the outer periphery an annular groove 73a, into which the utmost end of a shift arm 74 is retained, and is fixed to the inner end of a shifter shaft 75. The shifter shaft 75 is pivoted onto the left side plate 77 for closing an o pening formed on the outer surface of the left side wall of the front casing 10 and at the outer end of the shifter shaft 75 is fixed an on-off operating arm 76, which is fixed at the oppo site side to the speed control arm 61, and the on-off arm 76 is connected with a front wheel driving on-off level ( not shown) provided on a driver's cab through a link or the like. Thus, the speed control arm 61 and operating arm 76, which are disposed opposite to each other with respect to the housing, can easily interlock with the speed change operating member and the front wheel on-off operating member in the cab without any interference. In addition, between the clutch slider 73 and the front wheel driving shaft 13 is provided a ball detent mechanism for enabling the clutch slider 73 to be held in the positions of "4WD' and " 2WD " respectively.

In such construction, when the on-off operating arm 76 is turned to the " 4WD "position, the clutch slider 73 couples the front wheel driving shaft 13 with the running power takeout shaft 44 so that the power transmitted to the third running transmission shaft 43 is transmitted through the gear 71 →freely fitted gear 70 →gear 72 →running power takeout shaft 44→slider 73 →front wheel driving shaft 13 → universal joint 17→input shaft 19→front axle casing 18 so as to drive the front wheels 20. Simultaneously therewith, the third running transmission shaft 43 drives the rear wheels 21 through the differential gear unit D, so that the vehicle is driven by four wheel drive ( 4WD ). When the on-off operating arm 76 is turned to the "2WD" position, the clutch slider 73 disconnects the running power takeout shaft 44 from the first wheel driving shaft 13, thereby performing two wheel drive ( 2WD ) only.

As the above-mentioned, since the front wheel driving shaft 13 rotatably supported into the first chamber R1 for housing therein the HST, the front wheel driving shaft 13 can be supported in the first chamber R1 longitudinally of the vehicle body regardless of the gear type speed change unit and disposed substantially in the central position laterally of the vehicle body, thereby facilitating construction of power transmission from the gear type speed change unit to the front wheel driving shaft. Also, on whichever of the high speed position and low speed position is put the gear type speed change unit connected to the output shaft 45 of hydraulic motor M, the front wheels always synchronously rotate with respect to the rear wheels.

The clutch mechanism C for engaging or disengaging the front wheel driving shaft 13 and or from the running power takeout shaft 44 serving as the output portion of the gear type speed change unit can be housed in the lower space in the first chamber R1. The running power takeout shaft 44 is disposed coaxially and relative-rotatably with respect to the front wheel driving shaft 13, the respective shafts are journalled by the front wall 10a and rear wall 10b constituting the first chamber R1, and the clutch mechanism C is interlocked between the abutting portion of both the shafts 13 and 44, whereby, while effectively utilizing the vacancy in the first camber R1, the clutch mechanism C can simply and compactly be constructed.

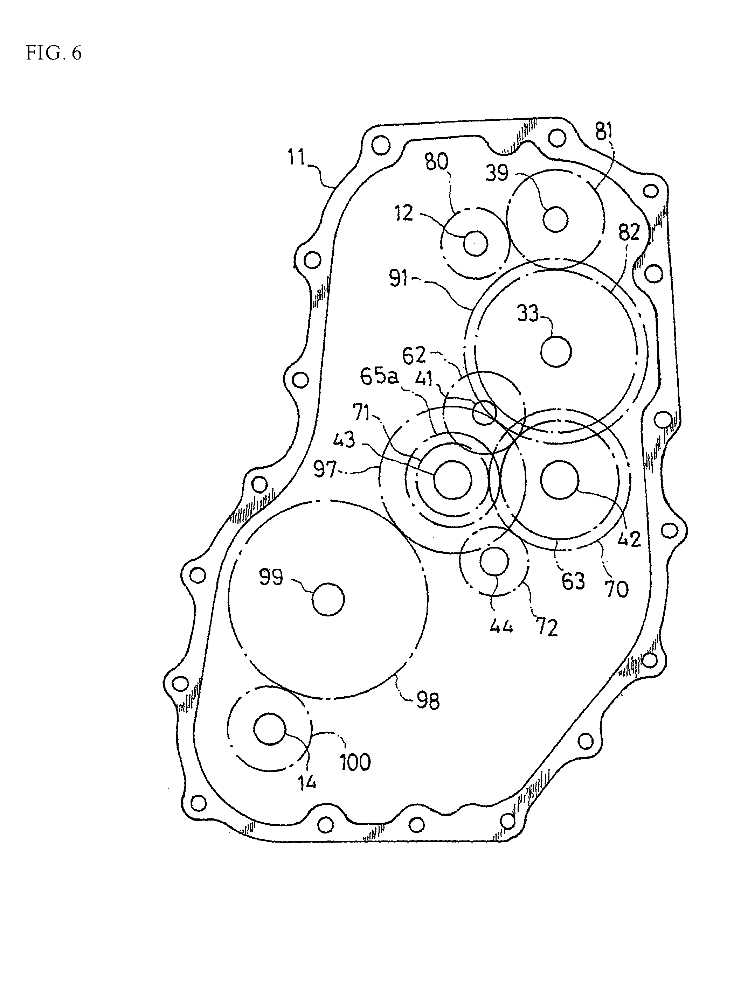

Next, explanation will be given on the PTO transmission unit. AS shown in Figs. 2 and 5, the input shaft 12 perforates at the rear end thereof through the rear wall 10b of the front casing 10 and fixes a gear 80 on one end of the input shaft 12, the gear 80 engaging with a gear 81 fixed onto the PTO counter shaft 39, the gear 81 engaging with a freely fitted gear 82 rotatable through a bearing 83 on the PTO transmission shaft 33. The gear 82 is provided at the side surface with a boss and, as enlarged in Fig.6, between the boss and a clutch casing 84 fixed onto the PTO transmission shaft 33 are interposed a plurality of friction plates so as to construct a multi-friction plate type hydraulic PTO clutch means 85. The pistons 86 in the clutch casing 84, when slid by supply of oil pressure to be discussed below, brings the friction plates in press contact with each other, and allows the cam 82 to engage with the PTO transmission shaft 33 through the clutch casing 84, so that the power is adapted to be transmitted from the input shaft 12 to the PTO transmission shaft 33. In addition, reference numeral 189 designates a spring for biasing the piston 86 in the direction of releasing the biased friction plates.

The PTO transmission shaft 33 projects at the front end thereof through the rear wall 10b of the front casing 10 and is positioned in the first chamber R1, and a PTO brake G is constructed therein so as to effectively use the vacancy in the first chamber R1.

Next, explanation will be given on a driving system of the mid-PTO shaft 14 and rear PTO shaft 36. A mid-PTO driving gear 91 is freely fitted onto an intermediate portion of the PTO transmission shaft 33, and at the rear portion thereof, a hub 92 is fixed, and a transmission shaft 34 to connect with the rear PTO transmission shaft 35 is freely fitted at the front end coaxially onto the rear end of the PTO transmission shaft 33. An engaging member 93 is formed on the side surface of the mid-PTO driving gear 91 and that 94 is formed on the front end of the transmission shaft 34, and a clutch slider 95 is spline-coupled onto the hub 92 in relation of being not-relative-rotatable and axially slidable. A shift fork ( not shown ) is retained to an annular recess formed on the outer periphery of the clutch slider 95 and fixed onto a shifter shaft 122 shown in Fig. 9. The shifter shaft 122 is longitudinally slidably mounted between the rear wall 10a of the front casing 10 and the partition 11a at the rear casing 11 and positioned at the front end in the first chamber R1. Meanwhile, a switching shaft 77 is rotatably supported onto the left side plate 134 and an arm 133 is fixed to the inner end of the arm 134, and is retained at the front end to a groove of the shifter shaft 122. At the outer end of the switching shaft 134 is fixed a PTO switching arm 135, which is connected with a PTO switching lever 9 disposed at the side of the operator's cab through a link or the like. The mid-PTO driving gear 91, as shown in Figs.2 and 4, engages with an idle gear 97 freely rotatably fitted on the axially intermediate portion of the third running transmission shaft 43 through bearings 96, the idle gear. 97 engaging with a gear 98 fixed onto the counter shaft 99, and the gear 98 engages with a gear 100 fixed to the mid-PTO shaft 14, so that power is transmitted from the mid-PTO driving gear 91 to the mid-PTO shaft 14. Thus, a PTO transmission gear train comprising the mid-PTO driving gear 91, idle gear 97, gear 98 and gear 100 )for transmitting the power to the mid-PTO shaft 14 is housed in the second chamber R2 in the housing and is made compact in construction because the idle gear 97 is disposed utilizing one of shafts constituting the gear type speed change unit.

Accordingly, the PTO switching lever 9 disposed at the side of operator's cab is operated to allow the slider 95 to slide rearwardly , the hub 92 connects with the engaging member 94 on the transmission shaft 34 through the clutch slider 95, so that the power passing through the PTO clutch means 85 is transmitted in the order of the PTO transmission shaft 33→hub 92→clutch slider 95 →engaging member 94→tranmission shaft 34→rear PTO driving shaft 35, thereby driving the rear PTO shaft 36 only. When the clutch slider 95 is slidably moved forwardly by one step, the clutch slider 95 connects the engaging member 93 of the mid-PTO gear 91 and the engaging member 94 of the transmission shaft 34 with the hub 92 so as to drive the afroesaid rear PTO shaft 36, and the power is transmitted in the order of the PTO transmission shaft 33→hub 92→clutch slider 95 → engaging member 93→mid-PT0 driving gear 91,so as to drive the mid-PTO shaft 14 through the PTO transmission gear train and both the mid-PTO shaft 14 and rear PTO shaft 36 are driven. Furthermore, the clutch slider 95, when forwardly slidably moved, connects only the engaging member 93 of the mid-PTO driving gear 91 to the hub 92, whereby the power is transmitted in the order of the PTO transmission shaft 33 → hub 92 → clutch slider 95→engaging member 93→mid-PT0 driving gear 91, so as to drive the mid-PTO shaft 14 only.

Next, a differential gear unit D is housed in the third chamber R3 in the rear casing 11, and, as shown in Fig.23, engages through a bevel gear with the output shaft 43 of the gear type speed changing unit at the projecting portion thereof from the partition 11a. The differential gear unit D has diff-yoke shafts 28L and 28R leftwardly and rightwardly extending therefrom, the diff-yoke shafts 28L and 28R being pivotally supported in the rear axle casing 127L and 127R, and connected at the ends with the rear axles 27L and 27R through the reduction gear train respectively.

Within the rear axle casings 127L and 127R are house running brake units 137L and 137R for braking the rear axles 27L and 27R. In detail, the diff-yoke shafts 28L and 28R spline-engage with the inner peripheral ends of a plurality of rotation side friction plates 137a. The fixed side friction plates 137b contact in layers with the rotation side friction plates 137a are not-rotatably retained at the outer peripheral ends to the inner periphery of openings at the rear axle casings 127L and 127R respectively. At one end surface side of each outermost fixed side friction plate 137b is disposed each ring-like-shaped pressure plate 137c, and between the side surface of the pressure plates 137c and the side surface of the rear axle casings 127L and 127R are disposed cam means 137d for generating axial thrust at the pressure plate 137c respectively.

Also, brake operating shafts 137e are pivotally supported to the rear axle casings 127L and 127R respectively, at the inner end of each brake operating shaft 137e is formed a cam surface to abut against a projection of each pressure plate 137. At the outer end of the brake operating shafts 137a are fixed brake arms 152L and 152R connected with left and right turn brake pedals 7L and 7R respectively. When the brake operating shafts 137e are rotated by the brake arms 152L ans 152R, the cam surfaces rotate the pressure plate 137c around the diff-yoke shafts 28L and 28R through the aforesaid projections, and the thrust generating cam means 137d act to allow the pressure plate 137c to bias the friction plates 137a and 137b. Thus, the running brake units 137L and 137R are actuated to exert the braking action onto the diff-yoke shafts 28L and 28R, in other words, the rear axles 27L and 27R.

## Claims

1. A transmission for a working vehicle to be interposed between an engine and driven wheels of said vehicle, comprising:
a housing containing
a hydrostatic transmission (P1,M) which is switchable for forward and rearward movement and acceleration by an operating member (61),
a gear type speed changing unit (41-43,62-68), the running speed of which is changeable in a plurality of stages by a mechanical speed-changing mechanism (67,68,106-110), wherein said gear type speed changing unit (41-43,62-66) is driven by said hydrostatic transmission (P1,M), and
a restraining mechanism which is mechanically coupled to said speed-changing mechanism (67,68,106-110) such that said operating member (61) of said hydrostatic transmission (P1,M) is restricted with respect to its operation range such that a rearward acceleration of the hydrostatic transmission (P1,M) is limited when said gear type speed changing unit (41-43/62-68) is in a high speed stage.

2. The transmission for a working vehicle as set forth in claim 1, wherein
said housing comprises a first (R1) and a second chamber (R2), said hydrostatic transmission (P1,M) being housed in said first chamber (R1) and said gear type speed changing unit (41-43,62-68) being housed in said second chamber (R2).

3. The transmission for a working vehicle as set forth in claim 2, wherein said restraining mechanism comprises:
cam means (107a) displaceable in said first chamber (R1) upon a switching operation of said speed-changing mechanism (67,68,106-110) of said gear type speed changing unit (41-43,62-68),
a restraining pin (114) provided with one end thereof at a predetermined position within the rearward acceleration operation range of said operating member (61) of said hydrostatic transmission (P1,M) and adapted to project and retract with respect to said operating member (61),
a restraining arm (111) supported in said first chamber (R1) so as to be pivotable around a longitudinal axis of said housing and comprising a first arm portion (111a) abutting against said cam means (107a) with a cam-follower portion (112) and a second arm portion (lllb) abutting against another end of said restraining pin (114), so that, when said speed-changing mechanism (67,68,106-110) switches said gear type speed changing unit (41-43,62-68) to the high speed stage, said cam-follower portion (112) of said first arm portion (111a) rides on said cam means (107a), thereby pivoting said restraining arm (111), whereby said second arm portion (lllb) is actuated to push out said restraining pin (114) toward said operating member (61).

4. The transmission for a working vehicle as set forth in claim 2 or 3, wherein an opening in a front wall (10a) of said first chamber (R1) which faces the forward driving direction of said working vehicle when said transmission is mounted therein is covered with a cover member (40), wherein one of a hydraulic pump (P1) and a hydraulic motor (M) constituting said hydraulic transmission is mounted on one surface of said cover member (40) in said first chamber (R1) and the other one is mounted on the opposite surface of said cover member (40) facing the forward driving direction of said working vehicle, and wherein a front wheel driving shaft (13) is drivingly connected with said gear type speed changing unit (41-43,62-68) housed in said second chamber (R2) and rotatably penetrates said first chamber (R1) and a wall of said housing so as to project toward the forward driving direction of said working vehicle.

5. The transmission for a working vehicle as set forth in claim 4, wherein said cover member (40) is separable from said housing.

6. The transmission for a working vehicle as set forth in claim 4 or 5, wherein said cover member (40) comprises oil passsages (40a,40b) formed therein for fluid connection betweeen said hydraulic pump (P1) and said hydraulic motor (M) mounted oppositely thereon.

7. The transmission for a working vehicle as set forth in claim 4, 5 or 6, wherein a clutch mechansim (C) for engaging and disengaging said front wheel drive shaft (13) with and from an output portion of said gear type speed changing unit (41-43,62-68) is housed in said first chamber (R1).

8. The transmission for a working vehicle as set forth in claim 7, wherein said operating member of said hydrostatic transmission is a speed control arm (61) disposed at one side of said housing and an operating arm (76) for said clutch mechanism (C) is disposed at another side of said housing.

9. The transmission for a working vehicle as set forth in any one of claims 5 to 7, wherein said operating member of said hydrostatic transmission is a first speed control member (61) for changing a direction and an amount of discharge fluid of said hydraulic pump (P1) disposed at one side of said housing, and said mechanical speed-changing mechanism of said gear type speed changing unit (41-43,62-68) comprises a second speed control member (107) for switching said gear type speed changing unit (41-43,62-68) in said plurality of stages disposed in said housing.

## Patentansprüche

1. Getriebe für ein Arbeitsfahrzeug, das zwischen einen Motor und Antriebsrädern des Fahrzeugs einzufügen ist, mit
einem Gehäuse, das enthält:
ein hydrostatisches Getriebe (P1,M), das für eine Vorwärts- und Rückwärtsbewegung sowie eine Beschleunigung durch ein Betätigungselement (61) schaltbar ist,
eine Zahnrad-Geschwindigkeitswechseleinheit (41-43,62-68), deren Laufgeschwindigkeit in mehreren Stufen durch einen mechanischen Geschwindigkeitswechselmechanismus (67,68,106-110) veränderbar ist, wobei die Zahnrad-Geschwindigkeitswechseleinheit (41-43,62-66) von dem hydrostatischen Getriebe (P1,M) angetrieben wird, und
einen Einschränkungsmechanismus, der mechanisch mit dem Geschwindigkeitswechselmechanismus (67,68,106-110) so gekoppelt ist, dass das Betätigungselement (61) des hydrostatischen Getriebes (P1,M) in Bezug auf seinen Arbeitsbereich eingeschränkt ist, so dass eine Rückwärtsbeschleunigung des hydrostatischen Getriebes (P1,M) begrenzt ist bzw. wird, wenn die Zahnrad-Geschwindigkeitswechseleinheit (41-43,62-68) sich in einer Hochgeschwindigkeitsstufe befindet.

2. Getriebe für ein Arbeitsfahrzeug nach Anspruch 1, wobei
das Gehäuse eine erste (R1) und eine zweite Kammer (R2) aufweist, wobei das hydrostatische Getriebe (P1,M) in der ersten Kammer (R1) untergebracht ist und die Zahnrad-Geschwindigkeitswechseleinheit (41-43,62-68) in der zweiten Kammer (R2) untergebracht ist.

3. Getriebe für ein Arbeitsfahrzeug nach Anspruch 2, wobei der Einschränkungsmechanismus umfasst:
ein Nocken- bzw. Kurvensteuermittel (107a), das in der ersten Kammer (R1) bei einem Schaltvorgang des Geschwindigkeitswechselmechanismus (67,68,106-110) der Zahnrad-Geschwindigkeitswechseleinheit (41-43, 62-68) verschiebbar ist,
einen Einschränkungsstift (114), der mit seinem einen Ende an einer vorbestimmten Position innerhalb des Rückwärtsbeschleunigungs-Betätigungsbereichs des Betätigungselements (61) des hydrostatischen Getriebes (P1,M) vorgesehen ist und in Bezug auf das Betätigungselement (61) ausgefahren und zurückgezogen werden kann,
einen Einschränkungsarm (111), der in der ersten Kammer (R1) so gelagert ist, dass er um eine Längsachse des Gehäuses dreh-/schwenkbar ist und einen ersten Armabschnitt (111a), der an dem Nockenmittel (107a) mit einem Nockentastabschnitt (112) anliegt, sowie einen zweiten Armabschnitt (111b), der am anderen Ende des Einschränkungsstifts (114) anliegt, aufweist, so dass, wenn der Geschwindigkeitswechselmechanismus (67,68,106-110) die Zahnrad-Geschwindigkeitswechseleinheit (41-43,62-68) auf die Hochgeschwindigkeitsstufe schaltet, der Nockentastabschnitt (112) des ersten Armabschnitts (111a) auf dem Nockenmittel (107a) gleitet, wodurch der Einschränkungsarm (111) gedreht/geschwenkt wird, wodurch der zweite Armabschnitt (111b) betätigt wird, um den Einschränkungsstift (114) zu dem Betätigungselement (61) hin herauszudrücken.

4. Getriebe für ein Arbeitsfahrzeug nach Anspruch 2 oder 3, wobei eine Öffnung in einer Vorderwand (10a) der ersten Kammer (R1), welche der Vorwärtsfahrrichtung des Arbeitsfahrzeugs zugewandt ist, wenn das Getriebe darin eingebaut ist, mit einem Abdeckelement (40) bedeckt ist, wobei entweder eine Hydraulikpumpe (P1) oder ein Hydraulikmotor (M), welche das hydraulische Getriebe bilden, an einer Oberfläche des Abdeckelements (40) in der ersten Kammer (R1) angebracht ist und der/die andere an der gegenüberliegenden Oberfläche des Abdeckelements (40), welche der Vorwärtsfahrrichtung des Arbeitsfahrzeugs zugewandt ist, angebracht ist, und wobei eine Vorderrad-Antriebswelle (13) antriebsmäßig mit der Zahnrad-Geschwindigkeitswechseleinheit (41-43,62-68) verbunden ist, die in der zweiten Kammer (R2) untergebracht ist, und drehbar die erste Kammer (R1) sowie eine Wand des Gehäuses so durchsetzt, dass sie zu der Vorwärtsfahrrichtung des Arbeitsfahrzeugs hin vorsteht.

5. Getriebe für ein Arbeitsfahrzeug nach Anspruch 4, wobei das Abdeckelement (40) von dem Gehäuse trennbar ist.

6. Getriebe für ein Arbeitsfahrzeug nach Anspruch 4 oder 5, wobei das Abdeckelement (40) Öldurchgänge (40a,40b) umfasst, die darin zur Fluidverbindung zwischen der Hydraulikpumpe (P1) und dem Hydraulikmotor (M), die darauf einander gegenüberliegend angebracht sind, ausgebildet sind.

7. Getriebe für ein Arbeitsfahrzeug nach Anspruch 4, 5 oder 6, wobei ein Kupplungsmechanismus (C) zum in Eingriff bringen und außer Eingriff bringen der Vorderrad-Antriebswelle (13) mit einem Ausgangsabschnitt der Zahnrad-Geschwindigkeitswechseleinheit (41-43,62-68) in der ersten Kammer (R1) untergebracht ist.

8. Getriebe für ein Arbeitsfahrzeug nach Anspruch 7, wobei das Betätigungselement des hydrostatischen Getriebes ein Geschwindigkeitssteuerarm (61) ist, der an einer Seite des Gehäuses angeordnet ist, und ein Betätigungsarm (76) für den Kupplungsmechanismus (C) an einer anderen Seite des Gehäuses angeordnet ist.

9. Getriebe für ein Arbeitsfahrzeug nach einem der Ansprüche 5 bis 7, wobei das Betätigungselement des hydrostatischen Getriebes ein erstes Geschwindigkeitssteuerelement (61) zum Ändern einer Richtung und einer Menge von Austragsfluid der Hydraulikpumpe (P1) an einer Seite des Gehäuses angeordnet ist, und der mechanische Geschwindigkeitswechselmechanismus der Zahnrad-Geschwindigkeitswechseleinheit (41-43,62-68) ein im Gehäuse angeordnetes zweites Geschwindigkeitssteuerelement (107) zum Schalten der Zahnrad-Geschwindigkeitswechseleinheit (41-43,62-68) in die mehreren Stufen umfasst.

## Revendications

1. Transmission pour. un véhicule de travail à interposer entre un moteur et des roues motrices dudit véhicule, comprenant :
un boîtier contenant
une transmission hydrostatique (P1,M) qui est commutable pour un mouvement en avant et en arrière et
une accélération par un élément de commande (61),
une unité de changement de vitesse de type engrenage (41-43, 62-68), dont la vitesse de roulement peut être modifiée en une pluralité de niveaux par un mécanisme mécanique de changement de vitesse (67, 68, 106-110),
dans lequel ladite unité de changement de vitesse de type engrenage (41-43, 62-66) est entraînée par ladite transmission hydrostatique (P1, M), et
un mécanisme de retenue qui est couplé mécaniquement audit mécanisme de changement de vitesse (67, 68, 106-110) tel que ledit élément de commande (61) de ladite. transmission hydrostatique (P1, M) est limité par rapport à sa plage de commande de telle sorte qu'une accélération en arrière de la transmission hydrostatique (P1, M) est limitée lorsque ladite unité de changement de vitesse de type engrenage (41-43, 62-68) est à un niveau élevé de vitesse.

2. Transmission pour un véhicule de travail selon la revendication 1, dans laquelle ledit boîtier comprend une première (R1) et une deuxième chambre (R2), ladite transmission hydrostatique (P1, M) étant logée dans ladite première chambre (R1) et ladite unité de changement de vitesse de type engrenage (41-43, 62-68) étant logée dans ladite deuxième chambre (R2).

3. Transmission pour un véhicule de travail selon la revendication 2, dans laquelle ledit mécanisme de retenue comprend :
des moyens formant came (107a) déplaçables dans ladite première chambre (R1) lors d'une opération de commutation dudit mécanisme de changement de vitesse (67, 68, 106-110) de ladite unité de changement de vitesse de type engrenage (41-43, 62-68),
une broche de retenue (114) prévue avec une extrémité de celle-ci à une position prédéterminée au sein de la plage de commande d'accélération en arrière dudit élément de commande (61) de ladite transmission hydrostatique (P1, M) et adaptée pour faire saillie et se rétracter par rapport audit élément de commande (61) ,
un bras de retenue (111) supporté dans ladite première. chambre (R1) de manière à pouvoir pivoter autour d'un axe longitudinal dudit boîtier et comprenant une première portion de bras (111a) butant contre lesdits moyens formant came (107a) avec une portion formant contre-came (112) et une deuxième portion de bras (111b) butant contre une autre extrémité de ladite broche de retenue (114) de sorte que, lorsque ledit mécanisme de changement de vitesse (67, 68, 106-110) commute ladite unité de changement de vitesse de type engrenage (41-43, 62-68) au niveau de vitesse élevée,
ladite portion formant contre-came (112) de ladite première portion de bras (111a) passe par-dessus lesdits moyens formant came (107a), en pivotant ainsi ledit bras de retenue (111), de ce fait ladite deuxième portion de bras (111b) est actionnée pour pousser à l'extérieur ladite broche de retenue (114) vers ledit bras de commande (61).

4. Transmission pour un véhicule de travail selon la revendication 2 ou 3, dans laquelle une ouverture située dans une paroi avant (10a) de ladite première chambre (R1) qui est orientée dans . le sens d'entraînement en avant dudit véhicule de travail lorsque ladite transmission est montée à l'intérieur est recouverte d'un élément de recouvrement (40), dans laquelle l'un d'une pompe hydraulique (P1) et d'un moteur hydraulique (M) constituant ladite transmission hydraulique est monté sur une surface dudit élément de recouvrement (40) dans ladite première chambre (R1) et l'autre est monté sur la surface opposée dudit élément de recouvrement (40) orienté dans le sens d'entraînement en avant dudit véhicule de travail, et dans laquelle un arbre d'entraînement (13) de la roue avant est raccordé par entraînement à ladite unité de changement de vitesse de type engrenage (41-43, 62-68) logée dans ladite deuxième chambre (R2) et pénètre en pouvant tourner dans ladite première chambre (R1) et une paroi dudit boîtier de manière à faire saillie vers le sens d'entraînement en avant dudit véhiculé de travail.

5. Transmission pour un véhicule de travail selon la revendication 4, dans laquelle ledit élément de recouvrement (40) peut être séparé dudit boîtier.

6. Transmission pour un véhicule de travail selon la revendication 4 ou 5, dans laquelle ledit élément de recouvrement (40) comprend des passages d'huile (40a, 40b) formés à l'intérieur pour un raccordement fluide entre ladite pompe hydraulique (P1) et ledit moteur hydraulique (M) montés de façon opposée dessus.

7. Transmission pour un véhicule de travail selon la revendication 4, 5 ou 6, dans laquelle un mécanisme d'embrayage (C) pour engager et dégager ledit arbre menant avant (13) avec et à partir d'une portion extérieure de ladite unité de changement de vitesse de type engrenage (41-43, 62-68) est logé dans ladite première chambre (R1).

8. Transmission pour un véhicule de travail selon la revendication 7, dans laquelle ledit élément de commande de ladite transmission hydrostatique est un bras de commande de vitesse (61) disposé sur un côté dudit boîtier et un bras de commande (76) dudit mécanisme d'embrayage (C) est disposé sur un autre côté dudit boîtier.

9. Transmission pour un véhicule de travail selon l'une quelconque des revendications 5 à 7, dans laquelle ledit élément de commande de ladite transmission hydrostatique est un premier élément de commande de la vitesse (61) pour modifier un sens et une quantité de décharge du fluide de ladite pompe hydraulique (P1) disposée sur un côté dudit boîtier, et ledit mécanisme de changement de vitesse mécanique de ladite unité de changement de vitesse de type engrenage (41-43, 62-68) comprend un deuxième élément de commande de la vitesse (107) pour commuter ladite unité de changement de vitesse de type engrenage (41-43, 62-68) en ladite pluralité de niveaux disposés dans ledit boîtier.
